# EUROPEAN PATENT SPECIFICATION

(11) **EP 1 824 339 B1**
(45) Date of publication and mention of the grant of the patent: **18.02.2009**
(21) Application number: 05816213.2
(22) Date of filing: 15.12.2005
(51) Int. Cl.: A01N 65/00, A01N 25/00

(54) **METHOD FOR REPELLING PESTS WITH AN INSECT REPELLENT COMPOSITION BASED ON GARLIC**
VERFAHREN ZUM ABWEHREN VON SCHÄDLINGEN MIT EINER INSEKTENABWEHRZUSAMMENSETZUNG AUF KNOBLAUCHGRUNDLAGE
PROCEDE POUR REPOUSSER DES ANIMAUX NUISIBLES A L'AIDE D'UNE COMPOSITION INSECTIFUGE A BASE D'AIL

(30) Priority: 15.12.2004 NL 1027792; 16.06.2005 NL 1029267
(43) Date of publication of application: 29.08.2007
(73) Proprietor: Copier Groenadvies B.V., 6716 AG Ede (NL)
(72) Inventor: VAN GARDEREN, Willem, Govert, NL-1343 AL Almere (NL); DE ZEEUW, Gerard, Theodorus, NL-3711 DG Austerlitz (NL); COPIER, Jan, NL-6716 AG Ede (NL)
(74) Representative: Swinkels, Bart Willem
(86) International application number: PCT/NL2005/050075
(87) International publication number: WO 2006/065133

(56) References cited:
- WO-A-02/09513
- DE-A1- 3 810 748
- DE-B- 1 283 015
- GB-A- 2 126 895
- US-A- 4 876 090
- US-A- 5 429 817
- US-A- 5 733 552
- DATABASE CROPU [Online] D.J.PROSTAK: "Using garlic and seaweed extracts to deter European corn borer and fall armyworm on whorl stage sweet corn, 1994" XP002382246 retrieved from STN-INTERNATIONAL Database accession no. 1995-89030 & ARTHROPOD MANAGE. TESTS, vol. 20, 1995, page 88,
- DATABASE BIOSIS [Online] BIOSCIENCES INFORMATION SERVICE, PHILADELPHIA, PA, US; January 1999 (1999-01), GILL STANTON ET AL: "Use of soil and trunk injection of systemic insecticides to control lace bug on hawthorn" XP002382247 Database accession no. PREV199900123634 & JOURNAL OF ARBORICULTURE, vol. 25, no. 1, January 1999 (1999-01), pages 38-42, ISSN: 0278-5226
- DATABASE WPI Section Ch, Week 199822 Derwent Publications Ltd., London, GB; Class C04, AN 1998-245560 XP002382252 & JP 10 077203 A (KOJIMA S) 24 March 1998 (1998-03-24) -& DATABASE EPODOC [Online] EUROPEAN PATENT OFFICE, THE HAGUE, NL; XP002382248 & JP 10 077203 A 24 March 1998 (1998-03-24)
- DATABASE WPI Section Ch, Week 198801 Derwent Publications Ltd., London, GB; Class C03, AN 1988-004825 XP002353075 & JP 62 270485 A (KAMEI Y) 24 November 1987 (1987-11-24)
- DATABASE WPI Section Ch, Week 198730 Derwent Publications Ltd., London, GB; Class D13, AN 1987-210568 XP002382253 & JP 62 138151 A (SNOWDEN KK) 20 June 1987 (1987-06-20)
- DATABASE WPI Section Ch, Week 197240 Derwent Publications Ltd., London, GB; Class B04, AN 1972-64072T XP002382363 & JP 47 018652 A (MORIGUCHI T) 1972
- DATABASE WPI Section Ch, Week 200326 Derwent Publications Ltd., London, GB; Class C03, AN 2003-257453 XP002353080 & CN 1 170 504 A (LIU F) 21 January 1998 (1998-01-21)
- DATABASE WPI Section Ch, Week 200377 Derwent Publications Ltd., London, GB; Class C03, AN 2003-819474 XP002353076 & JP 2003 192516 A (NOGYO SEISAN HOJIN ECOFIRM OKINAWA YG) 9 July 2003 (2003-07-09)
- DATABASE WPI Section Ch, Week 198225 Derwent Publications Ltd., London, GB; Class C03, AN 1982-50855E XP002353074 & JP 57 075906 A (HORIUCHI I) 12 May 1982 (1982-05-12) -& DATABASE EPODOC EUROPEAN PATENT OFFICE, THE HAGUE, NL; XP002350320 & JP 57 075906 A 12 May 1982 (1982-05-12)

## Description

### Background to the invention

The present invention relates to a method for repelling pests, preferably insects, larvae, aphids, spiders, slugs and the like, from a plant (vegetation), preferably from trees, shrubs and bushes and in particular from trees, by administration of an insect repellent composition based on garlic.

It is known in the state of the art that garlic (Allium sativum Linn) and extracts thereof have an antibacterial and fungicidal action. More recently it has been found that garlic can also be used as insect repellent. For instance, it is described in US 5 733 552 how areas can be made "gnat-free" by spraying a mixture of garlic extract and water on these locations.

A natural pesticide based on garlic oil or garlic extract and an essential oil is also described in EP-A. 945 066 for combating, for example, mildew. In this case the treatment likewise comprises spraying the composition on the plants. A similar substance is described in US 5 429 817,-JP A 2003192516 and CN A 1170504.

A liquid fertiliser with insect repellent properties is described in Japanese Patent Application 62270485. The liquid fertiliser contains inter alia garlic and African Marigold.

In Japanese Patent Application 58067169 a juice is described where a garlic extract is mixed with juice that has been pressed from fruit, vegetables, vegetable material, seaweed and the tike.

D.J.Prostak: " USING GARLIC AND SEAWEED EXTRACTS TO DETER EUROPEAN CORN BORER AND FALL ARMYWORM ON WHORL STAGE SWEET CORN, 1994", ARTHROPOD MANAGEMENT TESTS, Vol. 20, 1995, page 88 discloses the treatment of sweet corn by applying compositions comprising garlic juice and liquefied seaweed extracts to leaves and the whorl.

Such methods have the disadvantage that the duration of this single exposure to insecticides is limited, certainly in climates with a great deal of precipitation and wind. In addition, spraying seldom leads to a homogeneous distribution over the plants and the access to higher plants is often difficult. Moreover, with such a treatment much of the sprayed liquid is lost by evaporation, etc. Because the absorption of insecticides via the foliage is very limited, the effects on insects, larvae and aphids that are found in other places, such as in the bark of a tree, will be reduced.

### Aim of the invention

One aim of the invention is to change the smell and taste of a plant, preferably a tree, shrub, bush or grass and in particular of trees and by this means to make these uninviting for insects, aphids, larvae, spiders and other pests such as slugs, by providing a method for administering an insect repellent composition based on garlic with a biologically and ecologically sound action, wherein the active constituents are dosed, evenly distributed and easily administered and care is taken that there is no odour nuisance for the environment.

A further aim of the invention is to improve the vitality of the plant, in particular a tree, shrub, bush or grass, at the same time.

### Description of the invention

The invention relates to a method for repelling pests, preferably insects, larvae, spiders or aphids, from a plant, in particular from a tree, shrub, bush or grass and in particular from a tree, wherein the plant is treated with a natural insect repellent composition that contains at least garlic and/or an extract thereof and seaweed and/or an extract thereof,
the method comprises making a hole down to the root zone of the plant and putting the natural insect repellent composition in this hole.

"Natural" insect repellent composition refers to the fact that this consists of principally biologically available constituents so as thereby not to contaminate the plant and the ground.

According to the invention a plant is understood to be the collection of trees, shrubs and bushes, including grasses. The method according to the invention is in particular suitable for repelling insects, spiders, larvae or aphids from a plant, in particular from a tree or bush, more particularly from a tree.

According to the invention pests are understood to be especially insects, larvae, spiders or aphids, but also slugs can be included here.

The insect repellent composition according to the invention is based on garlic and seaweed, that is to say that this insect repellent composition contains at least garlic and/or an extract thereof and seaweed and/or an extract thereof. Garlic extract is in this case defined as any liquid that can be extracted from a garlic clove, including garlic oil and water. Garlic juice, such as prepared by pressing garlic cloves, is also suitable as constituent in the insect repellent composition according to the invention. In the rest of this description these variants are referred to by the inclusive term "garlic".

It has been found that this administration form leads to improved distribution of an insect repellent composition over the entire plant, because the insect repellent composition is further transported through the plant in the xylem of the plant after absorption via the roots and is distributed over the whole plant, including root, stem, branches and leaves. "Xylem" refers to the vascular system that is responsible for the transport of water, minerals, nutrients and other especially inorganic substances through the plant. In the context of the invention the xylem consists of not only the wood vessels in the stem or stalk, but also all cells that contribute to the water transport through the plant, but also the water channels such as those that start in the root hairs and end in the leaves and needles. By making the insect repellent composition available via the root hairs, much less material is lost than via spraying of the foliage of the plant from the outside.

As a result of this more efficient use a lower dosage of the active constituents of the insect repellent composition can suffice and this has the additional advantage that possible (odour) nuisance for the environment by the garlic is reduced. The plants that take up this insect repellent composition in their sap do not start to smell. Moreover, a more long-lasting effect can be achieved as a result of this more efficient use.

According to the invention at least one hole is made in the ground in which the plant is rooted and specifically within such a distance from the plant that this hole is situated in the "root zone". The root zone is the ground layer in which the living roots are found, for practical reasons considered to be the layer in which the great majority of the roots are located. The root zone therefore comprises the entire surface of the surroundings of the plant where roots grow. In specific embodiments it is preferable that the holes are made in the "root hair zone", that is to say the part of the root zone in which the root hairs occur. This root hair zone is located within the root zone on the outside. The take up of moisture and food is highest in this location.

The average person skilled in the art will be able to estimate simply on the basis of the bulk of the plant visible above the ground how far and how deep the roots reach. In this respect it is preferable that at least one hole is made within the so-called crown projection, that is to say the margin of the crown, the bulk of the branches and the foliage, projected on the ground, preferably at least 1 metre within the margin of the crown projection More preferentially at least one hole will be made at a distance of less than 1.5 metre, in particular within 1 metre of the outside of the trunk. The hole in the ground is preferably less than 1.5 metre, preferably between 20 cm and 1 metre deep in the ground.

Preferably several holes are made in the root zone, at least one per square metre of the crown projection, preferably in a uniform distribution around the trunk. The insect repellent composition - and consequently the garlic - can then be administered in a uniform manner. The necessary number of holes is furthermore dependent on the desired dosage of the garlic and will be described in more detail below This hole is preferably a pop hole, that is to say a hole that is made with air pressure or, if so desired, finished off with air pressure after making the hole. By "popping" the ground is aerated, airways are created, in particular in essentially the horizontal direction, in the root zone and disruptive layers are penetrated. In addition, oxygen is administered in this manner. This can be advantageous in cases where gas exchange in the ground is hindered by compaction of the ground as a result of, for example, vibrations due to traffic.

In a preferred embodiment the insect repellent composition combined with a thickener is put in the hole. This is done, for example, by means of injection at high pressure. The thickener ensures that the composition has viscous properties and does not seep away into the ground rapidly. In this way retarded dosing of the composition over at least one and a half weeks is achieved.

The insect repellent composition is preferably put in the hole in a container. The insect repellent composition can in this case be applied before or after installing the container in the ground. However, it is preferable to place the container in the ground first and put the insect repellent composition in the container afterwards. The hole has a diameter such that the container fits therein and is preferably - within the root zone - of such a depth than (sic) the container can be concealed under the surface around the plant.

The container can be closed, has preferably a removable cap and the container is provided with at least one perforation that makes controlled transport of the insect repellent composition to the outside possible and in this way ensures sustained administration of the insect repellent composition, preferably spread over 1 to 4 weeks, more preferentially at least one and a half weeks. The perforation is of such a size that the garlic is released only by the suction of the surrounding soil particles. Consequently, it is preferable that the perforation has a size of 0.5 - 1 mm.

Preferably several, more preferentially between 3 and 10 perforations are made so as to reduce the risk of blockage. These several perforations can be situated on one or several sides of the container, but at least one perforation will be located in the bottom so as to prevent material being left on the base of the container. The perforations are preferably uniformly distributed over the height of the container. By using closed containers provided with one or more small perforations retarded dosage of the insect repellent composition is achieved and flushing out downwards, away from the root zone, is prevented prevented (sic). If necessary the speed of release can be increased by making additional perforations in a container that already has one or more perforations. The speed of release could also be reduced by sealing off, for example with tape, one or more perforations.

The container is preferably made of a plastic. The container can be in the form of a tube, in particular a tube with a length between 20 and 80 cm and a diameter between 5 and 100 mm. The container has preferably a capacity of 4 ml - 6.3 1, more preferentially 0.25 - 3.0 litre.

In another preferred embodiment the container is a drainage hose. This drainage hose is placed in the hole such that this is located essentially horizontally in the root zone. The hole is then a trench, preferably a ring-shaped trench around the trunk, preferably with a depth of 20 cm -1 m within the root hair zone. The drainage hose can be closed at both ends with a removable cap, but at at least one end, so that there is a filling point. The other end can then be closed permanently. Such a drainage hose has the advantage that this can easily be spread over a large area, for example as an unbroken piece around a plant, or stretched out along a row of plants. Thus a large area can be covered using a drainage hose and there is an added advantage that the entire area can be provided with the composition via one filling point. This can in particular be advantageous if administration has to be carried out several times, so the drainage hose can be reused. In such an embodiment the drainage hose has more perforations, depending on the length of the hose and the area that this covers. Consequently, in the description and appended claims, the term "container" also includes a drainage hose.

After putting the insect repellent composition in the hole in the root zone the hole is closed. In this case it is preferable to cover the hole again with the original material, such as ground level material or paving.

The position of the container can be marked in order to find the location thereof easily, for example in order to be able to remove the container later. However, the container can in this way also be re-used in order thus to save the costs of the container and the work associated with installation thereof.

Preferably, before putting the insect repellent composition in the hole it is mixed with water in a mass ratio that lies between 1:5 and 1:200, preferably between 1:40 and 1:110. In this case it is possible that the insect repellent composition is stored in aqueous medium, but it is more preferable to mix the insect repellent composition with water on site. In the case where a container is used, the insect repellent composition can be mixed with water just before the container is placed in the hole, but also after the container is already in the hole.

Furthermore, it is possible that a binder is added to the mixture of water and insect repellent composition. If the insect repellent composition is put into the hole directly - without container - a binder has to be added. This binder imparts a viscous character to the aqueous insect repellent composition and by this means retards the dosing of the insect repellent composition to the surroundings. By this means it is possible to keep the insect repellent composition active in the ground for a longer time. The binder must be a biological thickener, preferably on the basis of starch. Preferably the mass ratio of the solid constituents of the insect repellent composition and the binder is between 3:1 and 1:3.

In order to achieve the insect repellent effect by administration in the root zone according to the invention, it has been found that the garlic has to be administered in an amount, in the case of a tree, between 40 and 160 milligram per centimetre trunk thickness, preferably 60 -140 mg per centimetre trunk thickness, and in the case of a bush, between 4 and 20 mg per centimetre bush breadth, preferably 10 -18 mg per centimetre bush breadth.

After administration the active substances according to the invention are released into the ground, they are taken up via the root and transported to the other parts of the plant. In this way the smell and taste of these substances are encountered in the trunk, branches and leaves with which pests make contact. As a result of this the pests are repelled.

The invention also relates to a natural insect repellent composition for repelling pests, in particular insects, larvae, spiders and aphids, from a plant, in particular from a tree, shrub, bush or grass, more particularly from a tree, where the insect repellent composition contains at least garlic and/or an extract thereof and seaweed and/or an extract thereof. This insect repellent composition is suitable for the administration according to the invention.

The insect repellent composition contains seaweed and/or seaweed extract. Such a composition possesses not only an increased insect repellent activity of the garlic, but the seaweed extract has additionally a fungicidal action and retards the development of harmful soil-borne fungi. The seaweed also enhances the vitality of the plant. Preferably, on dry weight basis, the composition contains 10 - 60 % (m/m), preferably 20- 55 % (m/m) garlic and/or an extract thereof and 2 - 20 % (m/m) seaweed and/or seaweed extract.

More preferentially the insect repellent composition additionally contains soya oil. Besides an additional repellent action this also has a transport function and in this way ensures improved take up of the composition by the plant. The quantity thereof is preferably 1- 30 % (m/m), preferably 2 - 20 % (m/m), on dry weight basis.

In particular the insect repellent composition according to the invention additionally contains aloe vera, as a result of which the composition further improves the vitality of the plant, preferably in an amount of 1 -10 % (m/m), on dry weight basis.

The insect repellent composition according to the invention can additionally contain one or more of nut leaf extract, parsley extract, African Marigold extract, Nepeta extract and Urtica extract. It has been found that all these extracts have an insect repellent, in particular an aphid repellent, action, as a result of which they enhance the insect repellent action of garlic in the composition. Consequently, most preferentially all the listed constituents are present in the composition together. Preferably the insect repellent composition according to the invention contains these constituents, if present, in an amount of:
1-10 % (m/m) nut leaf extract;
1- 20 % (m/m) parsley extract;
1-10 % (m/m) African Marigold extract;
1-10 % (m/m) Nepeta extract; and
2 - 20 % (m/m) Urtica extract, on dry weight basis.

Of course a natural binder can be added to increase the viscosity and consequently to retard the dosing. This binder is preferably on the basis of starch. The preferred ratio of the binder with respect to the other solid constituents lies between 3:1 and 1:3.

It has been found that an insecticide with such a composition in a low dosage is very effective. The insect repellent action of the odour and taste substances from the garlic is enhanced, as a result of which relatively less of this odorous substance is necessary. Besides an insect repellent effect this insect repellent composition also has a fungicidal and/or antifungal action and this also affords better vitality of the plant.

The insect repellent composition according to the invention is particularly suitable for treating trees, plants, shrubs or bushes so as to repel therefrom insects, aphids, spiders, caterpillars, larvae, and other such pests, such as slugs. In this context repel is also understood to include a preventive treatment in order to prevent a plague of such pests or fungus growth and/or to improve the vitality of the plant. The insect repellent composition can be successfully employed in the for (sic) combating/prevention of disease and/or disorders such as plant louse, Dutch elm disease, caterpillar of the oak procession moth, leaf miner, mildew and honeydew, etc. Preferably the insect repellent composition is admimstered at an early stage after the diagnosis and particularly in the spring or early summer, because specifically in this period the sap in the plants starts to flow. The take up in the moisture from the ground is then optimum.

The insect repellent composition according to the invention can be in the form of a tablet, capsule or granulate, but can also be available in the form of an aqueous solution, where the total amount of solid constituents is between 10 - 100 gram per litre water. If the composition is in the form of a capsule, tablet or granulate it is preferable that the ratio of the composition and water in the mixture is between 1:5 and 1:50, preferably less (sic) 1:5 -1:20.

For the preparation of capsules it is, however, preferable that the solid constituents are taken up in a vegetable oil, preferably soya oil, and that the capsule wall consists of gelatine. The capsule can be a hard or a soft capsule.

For the preparation of a granulate preferably a particulate filler such as vermiculite is used.

For administration according to the invention the insect repellent composition is diluted with water to a dosage that is effective according to the aim of the invention, preferably a ratio of the insect repellent composition, optionally provided as aqueous mixture, mixed with water in a ratio (sic) that lies between 1:5 and 1:200, preferably between 1:10 and 1:100.

The invention also relates to a combination of a container with an insect repellent composition according to the invention, wherein the container can be closed and has at least one perforation. Furthermore, the container can have the characteristics as described above.

The present invention relates to a method for treating a piece of ground covered with grass. The present invention relates more particularly to the treatment of a piece of ground covered with grass that has been attacked by harmful pests, in particular one or more harmful insects. The present invention also relates to the preventive treatment of a piece of ground covered in grass for prevention of attack by harmful pests, in particular one or more harmful insects.

According to the present application the term "insects" includes not only the adult organisms, but also other forms such as larvae, pupae and the like.

Pieces of ground that are covered in grass, for example a lawn, sports field, playing field, meadow, airfield or the like, in particular sports fields, can be attacked by harmful insects. As a result of this the grass grows poorly and the grass mat on the piece of ground is weak, particularly when this is used intensively. The result of this is that the piece of ground becomes unusable for the intended purpose within a short time. A well-known example is a football pitch.

In the state of the art there are no known naturally based substances with which such harmful insects can be combated. In addition, in the state of the art there are no known substances with which pieces of ground covered in grass can be treated in an environmentally friendly manner in order to prevent attack by harmful insects.

Surprisingly it has now been found that the insect repellent composition according to the present invention is exceedingly suitable for the treatment of a piece of ground covered in grass that has been attacked by one or more harmful insects or for the treatment of a piece of ground covered in grass for preventing attack by harmful insects.

Consequently, the present invention also relates to a method for the treatment of a piece of ground covered in grass, wherein:
(a) an insect repellent composition that contains at least garlic and/or an extract thereof and seaweed and/or an extract thereof is applied to the piece of ground covered in grass; .and
(b) the piece of ground covered in grass is watered.

According to the present invention voracious insects are concerned in particular and particularly the May beetle (*Melolontha melolontha*), the summer chafer (*Amphimallon solstitialis*), the garden chafer (*Phyllopertha horticola*), the leatherjacket i.e. meadow cranefly (*Tipula paludosa*) and the blossom fly (*Dilophus febrilis*).

For preventive treatment preferably about 0.5 to about 5 litre of the insect repellent composition is used per 500 m² ground covered in grass, more preferentially about 0.7 to about 2.5 litre per 500 m².

For curative treatment about 0.7 to about 7.5 litre of the insect repellent composition is used per 500 m² ground covered in grass, more preferentially about 1.0 to about 5.0 litre per 500 m².

By use of the insect repellent composition both the ground as well as the vegetation takes on the aroma of the substance. With the complete composition of the insect repellent composition there is also an improvement in the vitality so that root development becomes optimum. By administration, insects will no longer eat the root of the plants and the parts of the plants. As a result of this, larvae will suffer a premature death from hunger and therefore not break out of the pupa and reach the adult stage. Flying and crawling insects will also no longer eat below ground and/or above ground parts of plants and will avoid the area.

Preferably the insect repellent composition will be applied to the ground covered in grass by means of watering or spraying. In the state of the art various devices are known for applying fertiliser to the ground by means of spraying and/or injecting. By way of illustration reference is made to NL 1012650, US 5 590 611, US 4 934 287. Consequently, according to the invention it is preferable that the insect repellent composition is applied to the ground covered in grass by means of spraying with the aid of a spraying or injection device that, for example, can be mounted on a suitable vehicle such as a tractor.

More preferentially the composition is applied by means of injection, in particular with the aid of an injecting machine for injecting liquid fertiliser compositions. Such a device is, for example, described in EP A 1 086 617. Such a device is found to be very suitable for introducing or injecting a liquid, for example a liquid fertiliser or the insect repellent composition according to the present invention, in the ground. Such a device comprises a supply part that can be mounted on a suitable vehicle such as a tractor and to which a liquid, for example from a tank, can be fed, a dispensing part that can turn with respect to the supply part and from which tubes or hollow pins extend, where the ends of the tubes or hollow pins can penetrate the ground and discharge the liquid there. The device can obviously consist of one or more such combinations of supply part and dispensing part and the working width and configuration can be adapted as desired. For instance the liquid can be injected under pressure. The advantage of such a device is that no evaporation or volatilisation of the insect repellent composition occurs.

The insect repellent composition is also injected in the immediate vicinity of the roots so that it can be taken up easily. Moreover the dosage of the insect repellent composition can easily be adapted to the requirements and this can be regulated very accurately. A very suitable device is marketed by the firm Duport B.V., Dedemsvaart, The Netherlands, under the name Duport Liquiliser.

### Examples

### Example 1a

An insect repellent composition for repelling insects, spiders, aphids and larvae from trees, plants, shrubs or bushes, which contains:
9 g garlic;
2 g soya oil;
1g parsley extract;
2 g seaweed extract;
1 g nut leaf extract;
1g aloe vera;
1 g African Marigold extract;
1g Nepeta extract; and
2 g Urtica extract,
with a total of 20 gram of constituents and wherein the constituents were previously extracted in 100 ml ethanol by means of preheating and then mixed with hand hot tap water.

### Example 1b

The insect repellent composition according to Example 1 was made up to 1 litre with water.

### Example 1c

Subsequently 15 gram binder on the basis of starch was added to 1 litre mixture as prepared in Example 1b.

### Example 2

Leaf miner was ascertained on a chestnut tree with a crown projection of 10 m². To treat this, 10 holes were made in the ground in the crown projection. These holes were dug to a depth of 60 cm and were located in a circle evenly distributed around the trunk, each at a distance of about 1 m from the tree. A tube with a capacity of approx. 2 litre and with 4 evenly distributed perforations on the long side and 1 perforation in the bottom was put into each hole. Subsequently 1 part (by mass) of the composition according to Example 1b was mixed with 50 parts water and this was then administered into the tubes. The tubes were closed with a lid. The ground was covered over with the original soil. After two weeks following covering spot checks were made to see if solution had been released.

### Example 3

As Example 2, but instead of applying the composition in containers, after digging holes around the tree these holes were filled with a mixture of water and the thickened mixture according to Example 1c in a mass ratio of 50:1, introduced by injection at a pressure of about 50 bar. The holes were then covered and spot checks were made after two weeks.

### Example 4

During the planting of an oak tree with a trunk diameter of 5 cm and a root zone diameter of approx. 1 m², 10 litre insect repellent composition with thickener as prepared according to Example 1c mixed with water in a mass ratio of 1:50 (1 part by mass thickened composition, 50 parts water) were administered next to the root ball. Afterwards the plant hole was filled in. As a result of this the substance could be available to the tree directly at the start of growth. Metallic oak boring beetle was prevented by this means.

### Example 5

Chestnut disease was detected in a chestnut tree with a crown projection of 100 m². To treat this, a pop hole was made with air pressure to a depth of 80 cm. By means of this popping (= soil aeration) airways were created in the root zone and disruptive layers were penetrated. Oxygen was also administered in this way. In addition, the insect repellent composition according to Example 1c was mixed with water in a mass ratio of 1:50. This mixture was introduced into the pop holes by means of injection at a pressure of approx. 50 bar.

## Claims

1. Method for repelling pests from a plant, wherein the plant is treated with a natural insect repellent composition that contains at least garlic and/or an extract thereof and seaweed and/or an extract thereof, wherein the method comprises making a hole down to the root zone of the plant and putting the natural insect repellent composition in this hole.

2. Method according to Claim 1, wherein the insect repellent composition comprises on dry weight basis 10 - 60 % (m/m) garlic and/or an extract thereof and 2 - 20 % (m/m) seaweed and/or an extract thereof.

3. Method according to Claim 1 or Claim 2, wherein the hole is at a distance of less than 1.5 metres from the outside of the trunk.

4. Method according to one of the preceding claims, wherein the pests comprise insects, larvae, spiders or aphids.

5. Method according to one of the preceding claims, wherein the plant is a tree, shrub, bush or grass.

6. Method according to one of the preceding claims, wherein the insect repellent composition additionally contains soya oil.

7. Method according to one of the preceding claims, wherein the insect repellent composition additionally contains aloe vera.

8. Method according to one of the preceding claims, wherein the insect repellent composition combined with a binder is put in the hole.

9. Method according to one of the preceding claims, wherein the insect repellent composition is put in the hole in a container.

10. Method according to Claim 9, wherein the container containing insect repellent composition can be closed and is provided with at least one perforation.

11. Method according to Claim 9 or 10, wherein the container is a drainage hose.

12. Method according to one of the preceding claims, wherein the hole is closed after application of the insect repellent composition.

13. Method according to one of the preceding claims, wherein before putting in the hole the insect repellent composition is mixed with water in a mass ratio that lies between 1:5 and 1:200.

14. Method according to one of the preceding claims, wherein the plant is a tree or bush and wherein the garlic and/or the extract thereof is administered in an amount of, in the case of tree, between 40 and 160 mg per centimetre trunk thickness and, in the case of a bush, between 4 and 20 mg per centimetre bush breadth.

15. Method according to one of the preceding claims, wherein the insect repellent composition additionally contains one or more of nut leaf extract, parsley extract, African Marigold extract, Nepeta extract and Urtica extract.

16. Method according to Claim 15, wherein the insect repellent composition contains:
10 - 60 % (m/m) garlic,
2 - 20 % (m/m) seaweed extract;
1 - 30 % (m/m) soya oil;
1 - 10 % (m/m) aloe vera;
1 - 10 % (m/m) nut leaf extract;
1 - 20 % (m/m) parsley extract;
1 - 10 % (m/m) African Marigold extract;
1 - 10 % (m/m) Nepeta extract; and
2 - 20 % (m/m) Urtica extract,
on dry weight basis.

17. Method according to one of the preceding claims, wherein the insect repellent composition is used in the form of a tablet, capsule or granulate.

18. Method according to one of the preceding claims, wherein the insect repellent composition is used in the form of an aqueous solution, where the total amount of constituents is between 10 - 100 gram per litre water.

19. Method for repelling insects from a piece of ground covered in grass that has been attacked by one or more insects harmful to the grass or for preventing attack of the grass by one or more insects, wherein a piece of ground covered in grass is treated, wherein:
(a) an insect repellent composition that contains at least garlic and/or an extract thereof and seaweed and/or an extract thereof is applied to the piece of ground covered in grass; and
(b) the piece of ground covered in grass is watered.

20. Combination of a container and an insect repellent composition that contains at least garlic and/or an extract thereof and seaweed and/or an extract thereof, wherein the container can be closed and has at least one perforation.

21. Tablet, capsule or granulate containing an insect repellent composition that contains at least garlic and/or an extract thereof and seaweed and/or an extract thereof, wherein the insect repelling composition comprises, on dry weight basis, 10 - 60 % (m/m) garlic and/or an extract thereof and 2 - 20 % (m/m) seaweed or an extract thereof.

22. Method for repelling insects from a piece of ground covered in grass that has been attacked by one or more insects harmful to the grass or for preventing attack of the grass by one or more insects, wherein a piece of ground covered in grass is treated, wherein an insect repellent composition that contains at least garlic and/or an extract thereof and seaweed and/or an extract thereof is applied by means of injection to the piece of ground covered in grass.

## Patentansprüche

1. Verfahren zum Abwehren von Schädlingen von einer Pflanze, wobei die Pflanze mit einer natürlichen Insektenabwehrzusammensetzung behandelt wird, welche wenigstens Knoblauch und/oder einen Extrakt davon und Seetang und/oder einen Extrakt davon enthält, wobei das Verfahren das Erzeugen eines Lochs herab zu der Wurzelzone der Pflanze und das Eingeben der natürlichen Insektenabwehrzusammensetzung in dieses Loch umfasst.

2. Verfahren nach Anspruch 1, wobei die Insektenabwehrzusammensetzung, bezogen auf das Trockengewicht, 10-60 % (m/m) Knoblauch und/oder einen Extrakt davon und 2-20 % (m/m) Seetang und/oder einen Extrakt davon umfasst.

3. Verfahren nach Anspruch 1 oder Anspruch 2, wobei sich das Loch in einer Entfernung von weniger als 1,5 Meter von der Außenseite des Stammes befindet.

4. Verfahren nach einem der vorangehenden Ansprüche, wobei die Schädlinge Insekten, Larven, Spinnen oder Blattläuse umfassen.

5. Verfahren nach einem der vorangehenden Ansprüche, wobei die Pflanze ein Baum, Strauch, Busch oder Gras ist.

6. Verfahren nach einem der vorangehenden Ansprüche, wobei die Insektenabwehrzusammensetzung zusätzlich Sojaöl enthält.

7. Verfahren nach einem der vorangehenden Ansprüche, wobei die Insektenabwehrzusammensetzung zusätzlich Aloe vera enthält.

8. Verfahren nach einem der vorangehenden Ansprüche, wobei die Insektenabwehrzusammensetzung in Kombination mit einem Bindemittel in das Loch eingegeben wird.

9. Verfahren nach einem der vorangehenden Ansprüche, wobei die Insektenabwehrzusammensetzung in einem Behälter in das Loch eingegeben wird.

10. Verfahren nach Anspruch 9, wobei der Behälter, welcher die Insektenabwehrzusammensetzung enthält, verschlossen werden kann und mit wenigstens einer Perforation versehen ist.

11. Verfahren nach Anspruch 9 oder 10, wobei der Behälter ein Drainageschlauch ist.

12. Verfahren nach einem der vorangehenden Ansprüche, wobei das Loch nach der Anwendung der Insektenabwehrzusammensetzung verschlossen wird.

13. Verfahren nach einem der vorangehenden Ansprüche, wobei die Insektenabwehrzusammensetzung vor dem Eingeben in das Loch mit Wasser in einem Massenverhältnis vermischt wird, welches zwischen 1:5 und 1:200 liegt.

14. Verfahren nach einem der vorangehenden Ansprüche, wobei die Pflanze ein Baum oder Busch ist und wobei der Knoblauch und/oder der Extrakt davon in einer Menge zwischen 40 und 160 mg pro Zentimeter Stammdicke im Falle eines Baumes und zwischen 4 und 20 mg pro Zentimeter Buschbreite im Falle eines Busches verabreicht wird.

15. Verfahren nach einem der vorangehenden Ansprüche, wobei die Insektenabwehrzusammensetzung zusätzlich einen oder mehrere der folgenden Extrakte enthält: Nussblatt-Extrakt, Petersilien-Extrakt, Tagetes erecta-Extrakt, Nepeta-Extrakt (Katzenminze-Extrakt) und Urtica-Extrakt (Brennessel-Extrakt).

16. Verfahren nach Anspruch 15, wobei die Insektenabwehrzusammensetzung enthält:
10-60 % (m/m) Knoblauch,
2-20 % (m/m) Seetang-Extrakt;
1-30 % (m/m) Sojaöl;
1-10 % (m/m) Aloe vera;
1-10 % (m/m) Nussblatt-Extrakt;
1-20 % (m/m) Petersilien-Extrakt;
1-10 % (m/m) Tagetes erecta-Extrakt;
1-10 % (m/m) Nepeta-Extrakt; und
2-20 % (m/m) Urtica-Extrakt,
bezogen auf das Trockengewicht.

17. Verfahren nach einem der vorangehenden Ansprüche, wobei die Insektenabwehrzusammensetzung in Form einer Tablette, einer Kapsel oder eines Granulats verwendet wird.

18. Verfahren nach einem der vorangehenden Ansprüche, wobei die Insektenabwehrzusammensetzung in Form einer wässrigen Lösung verwendet wird, wobei die Gesamtmenge der Bestandteile zwischen 10-100 Gramm pro Liter Wasser beträgt.

19. Verfahren zum Abwehren von Insekten von einem mit Gras bedeckten Grundstück, welches von einem oder mehreren für das Gras schädlichen Insekten angegriffen worden ist, oder zum Verhindern eines Angriffs von einem oder mehreren Insekten auf das Gras, wobei ein mit Gras bedecktes Grundstück behandelt wird, wobei:
(a) eine Insektenabwehrzusammensetzung, welche wenigstens Knoblauch und/oder einen Extrakt davon und Seetang und/oder einen Extrakt davon enthält, auf das mit Gras bedeckte Grundstück aufgebracht wird; und
(b) das mit Gras bedeckte Grundstück bewässert wird.

20. Kombination aus einem Behälter und einer Insektenabwehrzusammensetzung, welche wenigstens Knoblauch und/oder einen Extrakt davon und Seetang und/oder einen Extrakt davon enthält, wobei der Behälter verschlossen werden kann und wenigstens eine Perforation aufweist.

21. Tablette, Kapsel oder Granulat, enthaltend eine Insektenabwehrzusammensetzung, welche wenigstens Knoblauch und/oder einen Extrakt davon und Seetang und/oder einen Extrakt davon enthält, wobei die Insektenabwehrzusammensetzung, bezogen auf das Trockengewicht, 10-60 % (m/m) Knoblauch und/oder einen Extrakt davon und 2-20 % (m/m) Seetang oder einen Extrakt davon umfasst.

22. Verfahren zum Abwehren von Insekten von einem mit Gras bedeckten Grundstück, welches von einem oder mehreren für das Gras schädlichen Insekten angegriffen worden ist, oder zum Verhindern eines Angriffs von einem oder mehreren Insekten auf das Gras, wobei ein mit Gras bedecktes Grundstück behandelt wird, wobei eine Insektenabwehrzusammensetzung, welche wenigstens Knoblauch und/oder einen Extrakt davon und Seetang und/oder einen Extrakt davon enthält, mittels Injektion auf das mit Gras bedeckte Grundstück aufgebracht wird.

## Revendications

1. Procédé visant à repousser des organismes nuisibles loin d'une plante, dans lequel la plante est traitée au moyen d'une composition répulsive anti-insectes naturelle contenant au moins de l'ail et/ou un extrait d'ail, ainsi que des algues et/ou un extrait d'algues, le procédé comprenant l'étape consistant à faire un trou jusqu'à la région des racines de la plante et à déposer la composition répulsive anti-insectes naturelle dans ledit trou.

2. Procédé selon la revendication 1, dans lequel la composition répulsive anti-insectes comprend, sur la base du poids à sec, de 10 à 60 % (m/m) d'ail et/ou d'extrait d'ail et de 2 à 20 % (m/m) d'algues et/ou d'extrait d'algues.

3. Procédé selon la revendication 1 ou 2, dans lequel le trou est situé à une distance inférieure à 1,5 mètre de l'extérieur du tronc.

4. Procédé selon l'une quelconque des revendications précédentes, dans lequel les organismes nuisibles comprennent les insectes, les larves, les araignées ou les pucerons.

5. Procédé selon l'une quelconque des revendications précédentes, dans lequel la plante est un arbre, un arbuste, un buisson ou du gazon.

6. Procédé selon l'une quelconque des revendications précédentes, dans lequel la composition répulsive anti-insectes comprend, en outre, de l'huile de soja.

7. Procédé selon l'une quelconque des revendications précédentes, dans lequel la composition répulsive anti-insectes comprend, en outre, de l'aloe vera.

8. Procédé selon l'une quelconque des revendications précédentes, dans lequel la composition répulsive anti-insectes est combinée à un liant avant d'être déposée dans le trou.

9. Procédé selon l'une quelconque des revendications précédentes, dans lequel la composition répulsive anti-insectes est déposée dans un récipient placé dans le trou.

10. Procédé selon la revendication 9, dans lequel le récipient contenant la composition répulsive anti-insectes peut être fermé et est pourvu d'au moins une perforation.

11. Procédé selon la revendication 9 ou 10, dans lequel le récipient est un tuyau de drainage.

12. Procédé selon l'une quelconque des revendications précédentes, dans lequel le trou est refermé après le dépôt de la composition répulsive anti-insectes.

13. Procédé selon l'une quelconque des revendications précédentes, dans lequel avant son dépôt dans le trou, la composition répulsive anti-insectes est mélangée avec de l'eau selon un rapport pondéral allant de 1 : 5 à 1 : 200.

14. Procédé selon l'une quelconque des revendications précédentes, dans lequel la plante est un arbre ou un buisson et dans lequel l'ail et/ou l'extrait d'ail est administré, dans le cas d'un arbre, à hauteur de 40 à 160 mg par centimètre d'épaisseur du tronc, et dans le cas d'un buisson, de 4 à 20 mg par centimètre d'envergure du buisson.

15. Procédé selon l'une quelconque des revendications précédentes, dans lequel la composition répulsive anti-insectes contient, en outre, au moins l'un des produits suivants : extrait de feuille de noyer, extrait de persil, extrait de rose d'Inde, extrait de népète et extrait d'ortie.

16. Procédé selon la revendication 15, dans lequel la composition répulsive anti-insectes contient :
10 à 60 % (m/m) d'ail ;
2 à 20 % (m/m) d'extrait d'algues ;
1 à 30 % (m/m) d'huile de soja ;
1 à 10 % (m/m) d'aloe vera ;
1 à 10 % (m/m) d'extrait de feuille de noyer ;
1 à 20 % (m/m) d'extrait de persil ;
1 à 10 % (m/m) d'extrait de rose d'Inde ;
1 à 10 % (m/m) d'extrait de népète ; et
2 à 20 % (m/m) d'extrait d'ortie,
sur la base du poids à sec.

17. Procédé selon l'une quelconque des revendications précédentes, dans lequel la composition répulsive anti-insectes est utilisée sous la forme de comprimés, de gélules ou de granulés.

18. Procédé selon l'une quelconque des revendications précédentes, dans lequel la composition répulsive anti-insectes est utilisée sous la forme d'une solution aqueuse, dans laquelle la quantité totale de constituants représente entre 10 et 100 grammes par litre d'eau.

19. Procédé visant à repousser des insectes loin d'une pelouse ayant été attaquée par un ou plusieurs insectes nuisibles au gazon ou à éviter toute attaque contre le gazon par un ou plusieurs insectes, dans lequel la pelouse est traitée, dans lequel :
(a) une composition répulsive anti-insectes contenant au moins de l'ail et/ou un extrait d'ail et des algues et/ou un extrait d'algues est appliquée sur la pelouse ; et
(b) la pelouse est arrosée.

20. Combinaison d'un récipient et d'une composition répulsive anti-insectes contenant au moins de l'ail et/ou un extrait d'ail et des algues et/ou un extrait d'algues, le récipient pouvant être fermé et comportant au moins une perforation.

21. Comprimés, gélules ou granulés contenant une composition répulsive anti-insectes comportant au moins de l'ail et/ou un extrait d'ail et des algues et/ou un extrait d'algues, la composition répulsive anti-insectes comprenant, sur la base du poids à sec, de 10 à 60 % (m/m) d'ail et/ou d'extrait d'ail et de 2 à 20 % (m/m) d'algues et/ou d'un extrait d'algues.

22. Procédé visant à repousser des insectes loin d'une pelouse ayant été attaquée par un ou plusieurs insectes nuisibles au gazon ou à éviter l'attaque du gazon par un ou plusieurs insectes, dans lequel une pelouse est traitée, dans lequel une composition répulsive anti-insectes contenant au moins de l'ail et/ou un extrait d'ail et des algues et/ou un extrait d'algues est administrée par injection à la pelouse.
